# EUROPEAN PATENT SPECIFICATION

(11) **EP 3 500 701 B1**
(45) Date of publication and mention of the grant of the patent: **17.01.2024**
(21) Application number: 17853566.2
(22) Date of filing: 19.08.2017
(51) Int. Cl.: D06F 37/26, F16F 15/28, D06F 37/22

(54) **RESIZABLE FIXING APPARATUS FOR FIXING OF COUNTER WEIGHTS TO A WASHING MACHINE TUB**
GRÖSSENANPASSBARE BEFESTIGUNGSVORRICHTUNG ZUR BEFESTIGUNG VON GEGENGEWICHTEN AN EINEM WASCHMASCHINENWANNE
APPAREIL DE FIXATION REDIMENSIONNABLE POUR LA FIXATION DE CONTREPOIDS SUR UNE CUVE DE LAVE-LINGE

(30) Priority: 20.08.2016 TR 201611761
(43) Date of publication of application: 26.06.2019
(73) Proprietor: Met Ileri Teknoloji Sistemleri Mühendislik Imalat Ithalat ve Ihracat Ticaret Limited Sirketi, 35430 Urla/Izmir (TR); Merdin, Murat, 35430 Urla/Izmir (TR); Merdin, Oguz Deniz, 35430 Urla/Izmir (TR)
(72) Inventor: MERDIN, Murat, 35430 Urla/Izmir (TR); MERDIN, Oguz Deniz, 35430 Urla/Izmir (TR)
(74) Representative: Yalçiner Patent and Consulting Ltd.
(86) International application number: PCT/TR2017/050398
(87) International publication number: WO 2018/056943

(56) References cited:
- CN-U- 203 559 269
- CN-Y- 200 974 915
- DE-A1-102008 053 250
- DE-B3-102014 224 761
- FR-A- 1 513 957
- KR-A- 20080 037 418

## Description

### FIELD

The described embodiment relates to an apparatus which performs the montage of fixing elements which fix any kinds of counterweights that are applied into the washing machines and assigned to restrain vibration, walking and tilting in the process of operation

### STATE OF THE ART

Certainly, among the constitutive components of a washing machine, the most significant active and fundamental element is the tub block, wherein the laundry is positioned. The tub is the major component which is driven by a motor and is being rotated around its own axis with a designated rate and speed of rotation.

Since the washing machine has a rotational mechanism, relevant rotation-caused unstable weights generate vibration and alike motions. Said vibrations and unwanted also unexpected motions cause strains in the mechanical system of washing machine and lead to walking of washing machine at the stage of spinning. Additionally, redundant amount of noise is originated. In order these effects to be controlled, counter weights are coupled onto the tumbler. Counterweights provide restrain said undesired motions and forces occurred during the operation of washing machine and stabilize aforementioned motions and forces. In this manner, counter weights are significant components for washing machines.

Presented geometry of counterweights by the prior art differ in terms of machine to machine and the tumblers that they are applied thereof. Sometimes, even a single producer brand of washing machines may use several various counterweight moulds.

When the counterweights utilized differ from each other, then principle of montage of counterweight fixing tools and/or apparatuses also vary. Thus, the operators have to arrange the montage apparatus manually for each and every new geometry of following and/or new counterweights which are to be mounted. Such circumstance would require the change of apparatus inevitably. These procedures lead to loss of time, increase labour costs and give rise to an inconvenient load of work Moreover, because of the need to produce different fixing apparatuses which are customized for each counterweight, production costs scale up. Additionally, there are conditions that the montage have to be clamped manually. Aforementioned manual operation leads to a significant amount of loss of time and capacity.

As being included in the prior art, TR2007/01223 application numbered Turkish patent application is found. TR2007/01223 discloses in its abstract for washing machine tumbler and counterweight assembly; that there are irremovable type of connector shells and extendible type of connector shells on facing of tumbler and/or in the parts where the counterweight is applied thereof. Both of aforementioned connector shells posses an outwardly extending bulge and cylindric body. Said cylindric form includes a coincident centric hole and connector elements, such as but not limited to screw, that applied thereon.

One set of connector hole is positioned upon counterweight through irremovable type of connector shells and the other set of connector hole upon counterweight is located in a way that opposing to the extending type of connector shells.

Through another examination of the prior art, it is found TR2013/04651 numbered patent application. TR2013/04651 discloses in its abstract as follows; disclosed invention herein a washing machine comprising, a body which includes a tumbler, a counterweights which enables tumbler to rotate stably during spinning and a fixing tool which enables counterweights to be fixed upon their shells. The fixing tool of washing machine comprises at least one pin, providing fixing of counterweight with at least one dowel which is inserted to another dowel by having it positioned upon tumbler.

Therefore, disclosed herein an embodiment with non-obvious improvements, which eliminates aforementioned disadvantages and satisfies the technical lacks of existing systems.

KR20080037418A discloses a front loading washing machine provided to reduce vibration and noise caused by unbalanced laundry by integrally engaging the rear surface of a rotary drum, a ball balancer, and a flange shaft, thereby transmitting rotation force of the flange shaft to the rotary drum and the ball balancer.

FR1513957A discloses a washing machine whose washing drum is rotatably mounted in an elastically suspended washing tub provided with damping elements. The invention relates in particular to a washing machine, the washing drum of which is rotatably mounted in an elastically suspended washing tub provided with damping elements, characterized by a supporting framework for the washing tub made of plastic, this framework being rigidly connected with the swivel hub of the washing drum.

### SUMMARY OF THE INVENTION

The invention described herein pertains to a fixing apparatus, which satisfies the aforementioned necessities, eliminates all existing disadvantages and brings additional advantages.

Significant aspect of the disclosed invention is that, generating a product at a lower-cost by lowering the labour costs to a considerable extent through formation of disclosed embodiment, which performs fixing without mechanical arrangement of any kinds of counterweight that are differing proportionally to the tumbler size and therefor bringing expansion of production capacity.

An object of the invention is to provide saving on time and material, since there is absence of necessity to use a different fixing apparatus for each and every counter weight.

Another object of the invention is to generate a product, for which no craftsmanship is needed and, that is practical and suitable for mass production.

A further object of the invention is to lower the costs of production, whereby having it manufactured in a monotype version rather than its shapes in different geometries.

A further object of the invention is to provide automatic access to each and every montage shell included by and upon counterweight, without any mechanical constraint.

A further object of the invention is to provide such applicability to the new fixing apparatus that the fixing apparatus is applicable to more than one type of counterweight.

### BRIEF DESCRIPTION OF THE DRAWINGS

The disclosure will be readily understood by the following detailed description in conjunction with the accompanying drawings, wherein like reference numerals designate like structural elements, and in which:
FIG. 1 illustrates the wide-angle perspective view of a counterweight prior to its montage in between the tumbler and the body.
FIG. 2 shows the general perspective view of a counterweight with three connector shells, which is in a fixed position on to the tumbler by the disclosed fixing apparatus.
FIG. 3 illustrates the cross-sectional view of a counterweight with three connector shells, which is in a fixed position on to the tumbler by the disclosed fixing apparatus.
FIG. 4 illustrates the general perspective view of a counterweight with two connector shells, which is in a fixed position onto the tumbler by the disclosed fixing apparatus.
FIG. 5 illustrates the cross-sectional view of a counterweight with two connector shells, which is in a fixed position onto the tumbler by the disclosed fixation apparatus.
FIG. 6 shows the general perspective view of a counterweight with three connector shells, which is in a different geometry and in a fixed position onto the tumbler by the disclosed fixation apparatus.
FIG. 7 illustrates the cross-sectional view of a counterweight with three connector shells, which is in a different geometry and in a fixed position onto the tumbler by the disclosed fixing apparatus.
FIG. 8 illustrates two dimensional general view of the disclosed fixing apparatus, in which connector elements are fitted into its connector shells.
FIG. 9 illustrates two dimensional general view of the disclosed fixing apparatus, in which its connector elements are fitted into its connector shells in a different position.
FIG. 10 illustrates a separate two dimensional view of the counterweight above.

### REFERENCE NUMBERS

10. Fixing apparatus
10.1: Connector channel
10.2: Main body
10.3: Shoulder for driving rack
10.4: Radiused surface
10.5: Arms
20: Counterweights
20.1: Connector shell
30: Connector element
40: Tumbler
50: Body
X- Channel Axis
Z- Central Axis

### DETAILED DESCRIPTION

Reference will now be made in detail to representative embodiments illustrated in the accompanying drawinas. It should be understood that the following descriptions are not intended to limit the embodiments to one preferred embodiment.

The following disclosure is directed to a fixation apparatus (10) which performs an easy and fast fixing of counterweights (20) in between tumbler (40) and body (50) by utilizing connector element (30), that are assigned to restrain vibration, walking and tilting in the process of operation of washing machines, and said tumbler (40) on which said counterweight (20) is fixed.

Disclosed fixing apparatus (10) includes the capacity to adapt said counterweight (20) into any connector shells (20.1) which are created in different axes, and said fixing apparatus (10) comprises a main body (10.2) that contains connector channels (10.1) which are positioned in various direction and angles.

Disclosed fixing apparatus (10) comprises shoulders for driving rack (10.3) which are included by each and every connector channel (10.1) and which provides a retaining surface for the lamella and rondel of said connector element (30).

Disclosed herein a fixation apparatus in Y shaped form, comprising three connector channels (10.1) which intersect in same central axis (Z) and are positioned in different angle and axes.

Disclosed fixing apparatus (10), apart from its Y shaped forming, may be constructed preferably in triangle form and/or another geometric form and comprises a main body (10.2) with multiple connector channels (10.1) that are applied thereon.

Disclosed fixing apparatus (10) comprises arms (10.5) which intersect in same central axis (Z) and are positioned in three different angles and axises.

Disclosed fixing apparatus (10) comprises arms (10.5), said arms (10.5) having radiused surfaces (10.4) upon their intersecting outmost flanges.

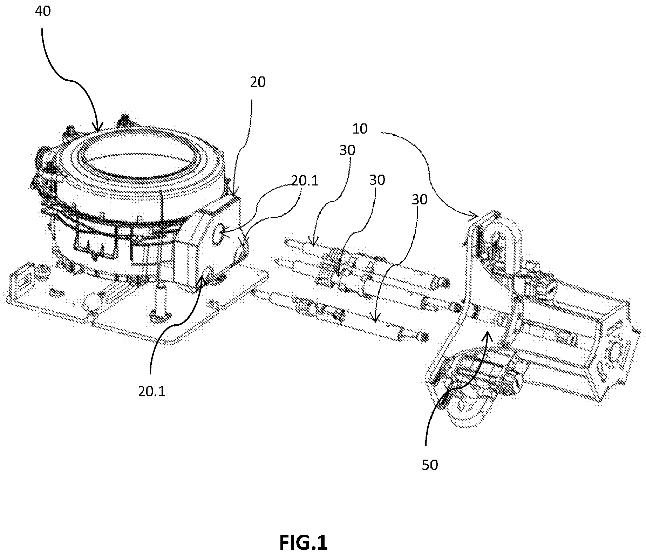

FIG. 1 illustrates demounted general perspective view of counterweight (20), which presents the pre-montage positioning of counter weight (20) in between tumbler (40) and body (50). When the washing machines getting started, rotational movement also begins. Thus, additional to rotational movement and the effect and forces generated by the laundry in tumbler (40), vibration, walking and tilting occur. These restrains are avoided by the utilization of counterweight (20) applied which is fixed on downward part of tumbler (40).

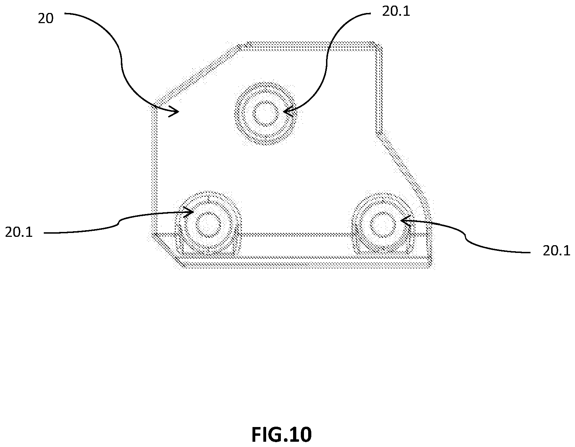

Since counterweights appear in diversified forms proportionate to tumbler (40) size and geometry, so that connector shells (20.1) thereon and relevant applicable connector elements in quantity are also fluctuant. Said counterweight (20) is shown separately by FIG. 10. Counterweight (20) is to be fixed in between tumbler (40) and body (50). Regardless of the geometry of counterweight (20) and/or the necessary quantity of connector elements (30), disclosed fixing apparatus (10) is eligible and sufficient to perform fixing. Said performance is achieved, owing to its connector channels (10.1).

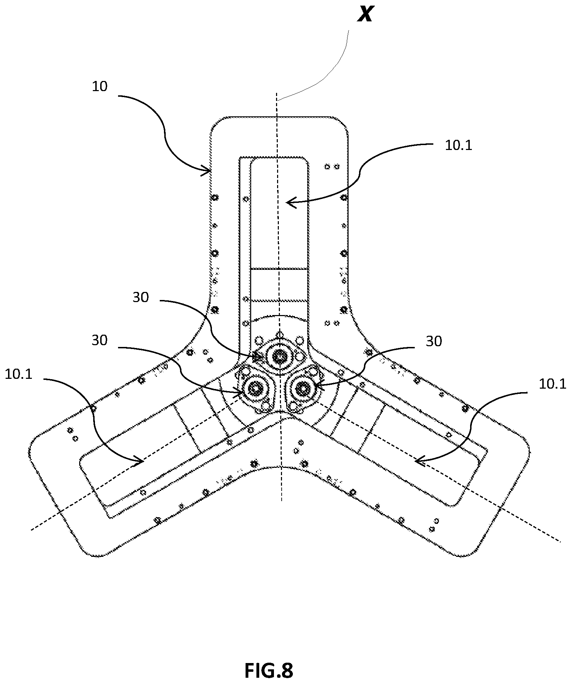

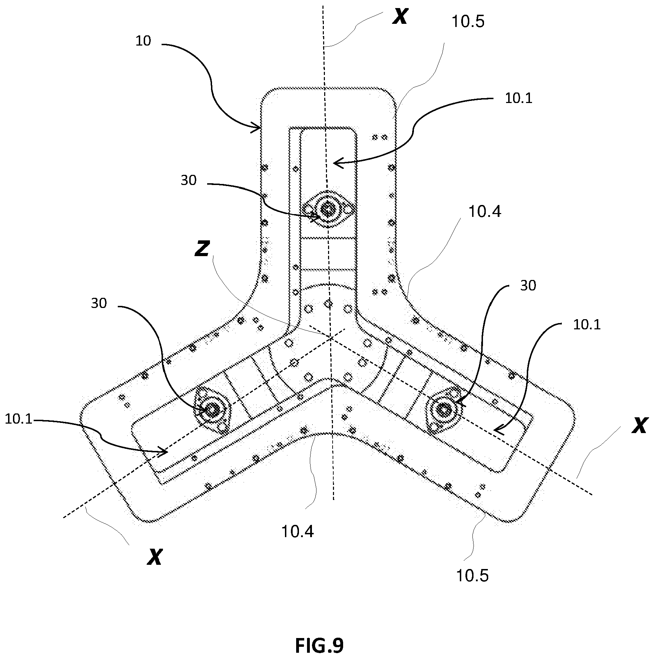

Connector elements (30) are moved along connector channels (10.1), therefor aforementioned fixation is achieved in a desired positioning. Said fixing apparatus (10) is preferably has a Y shaped form and comprises three arms (10.5), that they are angled with 120 degrees to each other. Each and every arm (10.5) comprises connector channels (10.1), along which connector elements (30) move. FIG. 8 and FIG.9 illustrate the two dimensional general view of disclosed fixing apparatus (10), wherein connector elements (30) are set on connector channels(10.1) of said fixing apparatus (10), in different positionings.

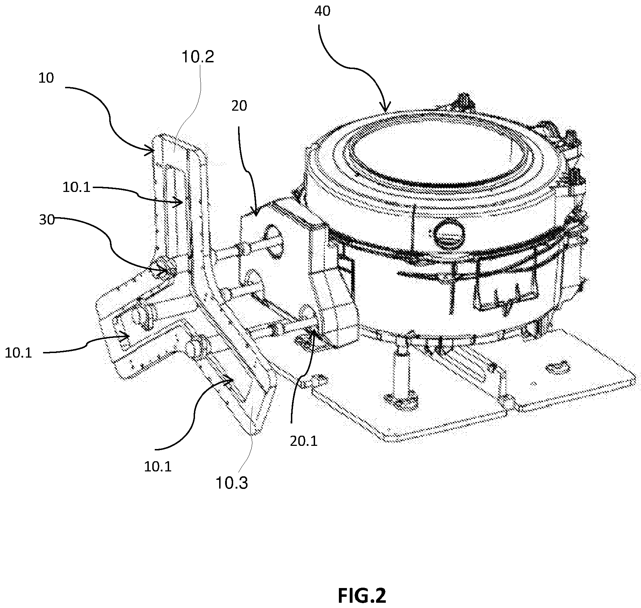

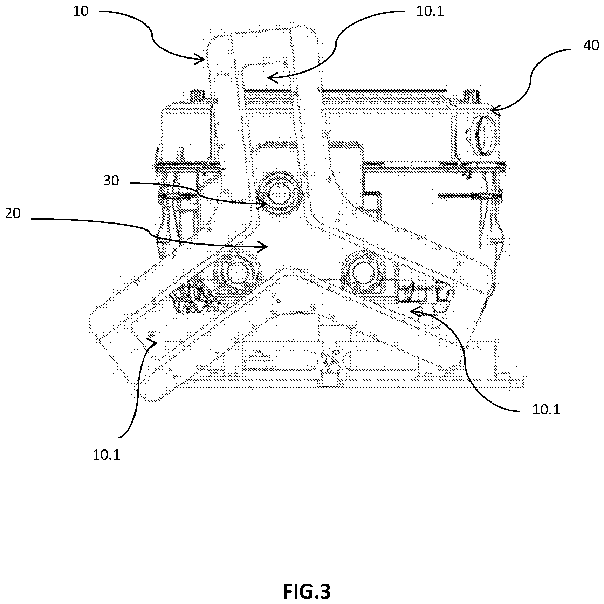

FIG. 2 illustrates the general perspective view of counterweight (20), which is fixed on to tumbler (40) by the disclosed fixation apparatus (10). Herein utilised counterweight (20), comprising three connector shells (20.1) proportionate to size of tumbler (40). The fixing operation is achieved by having connector elements (30) moved along connector channels (10.1) in a way to be inserted and opposing to connector shells (20.1), that said connector channels (10.1) are included in fixing apparatus (10). FIG.3 illustrates the cross-sectional general view of said operation.

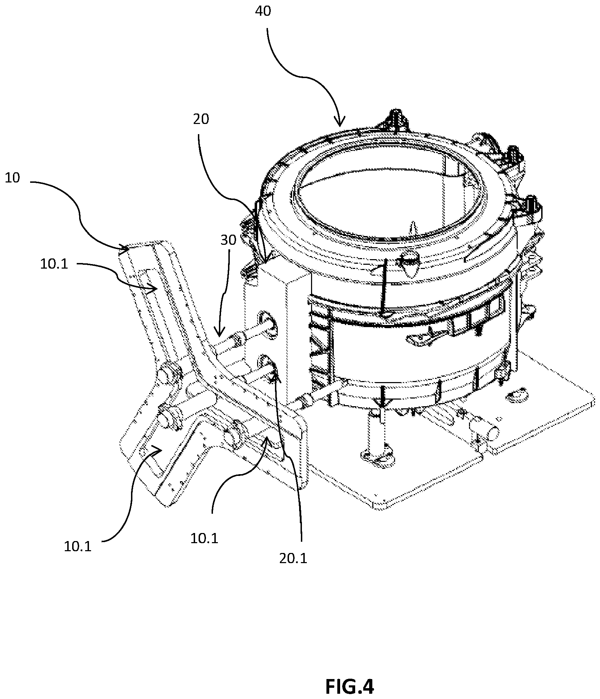

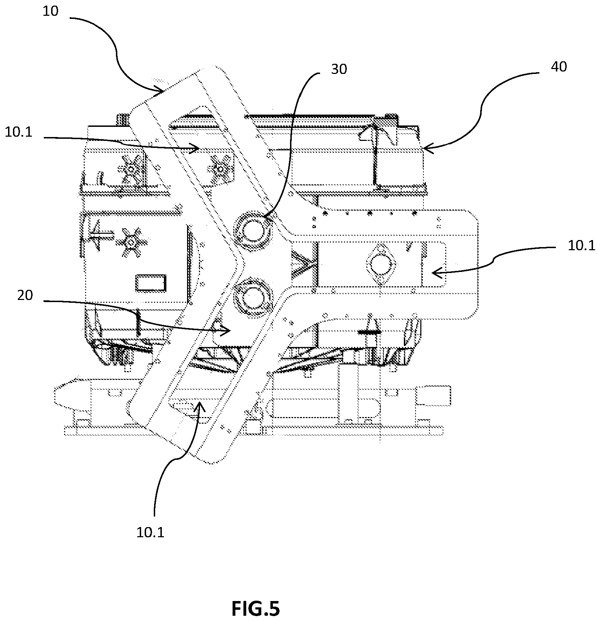

FIG. 4 illustrates the general perspective view of counterweight (20) comprising two connector shells (20.1), which is fixed onto tumbler (40) by the disclosed fixing apparatus (10). Herein utilised counterweight (20), comprising two connector shells (20.1) proportionate to size of tumbler (40). Fixation operation is held by having two of connector elements (30) moved in connector channels (10.1) in a way to be inserted and opposing to connector shells (20.1). One of connector elements (30) is unemployed as is shown by FIG.5 in a cross-sectional perspective view.

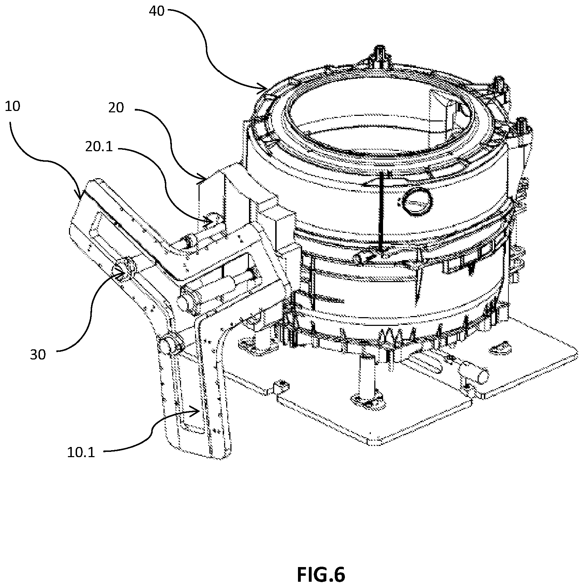

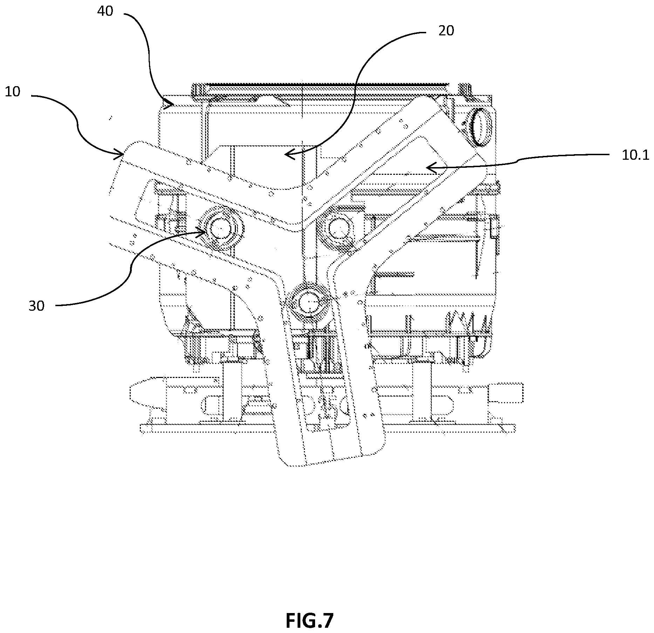

FIG. 6 illustrates general perspective view of counter weight (20) comprising three connector shells (20.1), which is in a different geometry and in a fixed position onto tumbler (40) by disclosed fixing apparatus (10). Herein utilised counterweight (20), comprising three connector shells (20.1) proportionate to size of tumbler (40) however the geometry of counterweight (20) is different. Therefore the position of connector shells (20.1) is different. The fixing operation is performed by fixing apparatus (10), by having connector elements (30) moved along connector channels (10.1). FIG. 7 illustrates the cross-sectional view of said operation.

## Claims

1. A fixing apparatus (10), for performing an easy and fast fixing of a counterweight (20) for restraining vibration, walking and tilting in the process of operation of a washing machine, whereby said counterweight (20) can be mounted between a tumbler (40) and a body (50) of a washing machine by utilizing connector elements (30) for fixing said counterweight (20) on said tumbler (40), **characterised in that** the fixing apparatus (10) comprises a main body (10.2) having connector channels (10.1) positioned at different directions and angles upon said main body (10.2) and along which said connector elements (30) can move linearly, so to have the capacity to adapt to counterweights (20) in diversified form, which have connector shells (20.1), which are generated in different axes and into which said connector elements (30) can be inserted.

2. The fixing apparatus (10) according to claim 1, wherein said fixing apparatus (10) comprises shoulders for a driving rack (10.3) which are included by each and every connector channel (10.1), whereby said shoulders for said driving rack (10.3) provide a retaining surface for a lamella and a rondel of said connector element (30).

3. The fixing apparatus (10) according to claim 1, wherein said connector channels (10.1) intersect in a same central axis (Z).

4. The fixing apparatus (10) according to claim 1 wherein said main body (10.2), apart from a Y-shaped forming, may be constructed in triangle form.

5. The fixing apparatus (10) according to claim 1, wherein said fixing apparatus (10) comprises arms (10.5) which intersect in a same central axis (Z) and are positioned in three different angles and axes.

6. The fixing apparatus (10) according to claim 5, wherein said arms (10.5) have radiused surfaces (10.4) upon their intersecting outmost flanges.

## Patentansprüche

1. Befestigungsvorrichtung (10) zur Durchführung des einfachen und schnellen Befestigens von einem Gegengewicht (20) zum Einschränken von Vibration, Wandern und Kippen im Betriebsprozess einer Waschmaschine, wobei das genanntes Gegengewicht (20) zwischen einer Waschtrommel (40) und einem Körper (50) der Waschmaschine montiert werden kann, indem die Verbindungselemente (30) zum Befestigen des genannten Gegengewichts (20) auf der genannten Trommel (40) verwendet werden, **dadurch gekennzeichnet, dass** die Befestigungsvorrichtung (10) einen Hauptkörper (10.2) umfasst, der die Verbindungskanäle (10.1) aufweist, die in verschiedenen Richtungen und Winkeln auf den genannten Hauptkörper (10.2) positioniert sind und entlang derer sich die genannten Verbindungselemente (30) linear bewegen, sodass sie die Anpassungsfähigkeit an die Gegengewichte (20) in verschiedenen Formen aufweisen, die die Verbindergehäusen (20.1) aufweisen, die in verschiedenen Achsen hergestellt werden und in die die genannten Verbindungselemente (30) eingesetzt werden können.

2. Befestigungsvorrichtung (10) nach Anspruch 1, wobei die genannte Befestigungsvorrichtung (10) die Schultern für eine Antriebszahnstange (10.3) umfasst, die jede einzelne Verbindungskanal (10.1) umfasst, wobei die genannten Schultern für die genannte Antriebszahnstange (10.3) eine Haltefläche für eine Lamelle und eine Unterlegscheibe des genannten Verbindungselements (30) vorsehen.

3. Befestigungsvorrichtung (10) nach Anspruch 1, wobei sich die genannten Verbindungskanäle (10.1) in der gleichen Mittelachse (Z) schneiden.

4. Befestigungsvorrichtung (10) nach Anspruch 1, wobei der genannte Hauptkörper (10.2) neben der Y-förmige Gestaltung dreieckig erstellt werden kann.

5. Befestigungsvorrichtung (10) nach Anspruch 1, wobei die genannte Befestigungsvorrichtung (10) die Arme (10.5) umfasst, die sich in der gleichen Mittelachse (Z) schneiden und in den drei verschiedenen Winkeln und Achsen positioniert sind.

6. Befestigungsvorrichtung (10) nach Anspruch 5, wobei die genannten Arme (10.5) die gerundeten Flächen (10.4) auf ihren sich schneidenden äußersten Flanschen aufweisen.

## Revendications

1. Appareil de fixation (10) pour réaliser une fixation facile et rapide d'un contrepoids (20) pour limiter les vibrations, la marche et le basculement dans le processus de fonctionnement d'une machine à laver, dans lequel ledit contrepoids (20) peut être monté entre un tambour (40) et un corps (50) d'une machine à laver en utilisant des éléments de connexion (30) pour fixer ledit contrepoids (20) sur ledit tambour (40), **caractérisé en ce que** l'appareil de fixation (10) comprend un corps principal (10.2) ayant des canaux de connexion (10.1) positionnés dans différentes directions et angles sur ledit corps principal (10.2) et le long desquels lesdits éléments de connexion (30) peuvent se déplacer linéairement, afin d'avoir la capacité de s'adapter à des contrepoids (20) de forme diversifiée, qui ont des coquilles de connexion (20.1), qui sont générées dans différents axes et dans lesquelles lesdits éléments de connexion (30) peuvent être insérés.

2. Appareil de fixation (10) selon la revendication 1, dans lequel ledit appareil de fixation (10) comprend des épaulements pour une crémaillère d'entraînement (10.3) qui sont inclus dans chacun des canaux de connexion (10.1), dans lequel lesdits épaulements pour ladite crémaillère d'entraînement (10.3) fournissent une surface de retenue pour une lamelle et une rondelle dudit élément de connexion (30).

3. Appareil de fixation (10) selon la revendication 1, dans lequel lesdits canaux de connexion (10.1) se croisent dans un même axe central (Z).

4. Appareil de fixation (10) selon la revendication 1, dans lequel ledit corps principal (10.2), en dehors d'une forme en Y, peut être construit en forme de triangle.

5. Appareil de fixation (10) selon la revendication 1, dans lequel ledit appareil de fixation (10) comprend des bras (10.5) qui se croisent dans un même axe central (Z) et sont positionnés dans trois angles et axes différents.

6. Appareil de fixation (10) selon la revendication 5, dans lequel lesdits bras (10.5) ont des surfaces arrondies (10.4) sur leurs brides les plus extérieures qui se croisent.
